(19) Europäisches Patentamt
European Patent Office
Office européen des brevets

(11) **EP 4 201 609 A1**

(12) **EUROPEAN PATENT APPLICATION**

(43) Date of publication:
**28.06.2023 Bulletin 2023/26**

(21) Application number: **22211360.7**

(22) Date of filing: **05.12.2022**

(51) International Patent Classification (IPC):
**B25J 11/00** (2006.01)          **B25J 13/08** (2006.01)
**B25J 19/02** (2006.01)          **G06N 3/008** (2023.01)

(52) Cooperative Patent Classification (CPC):
**B25J 11/001; B25J 13/08; G06N 3/008**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.12.2021 JP 2021207281**

(71) Applicant: **Casio Computer Co., Ltd.
Tokyo 151-8543 (JP)**

(72) Inventor: **Nakayama, Kenji
Hamura-shi, Tokyo (JP)**

(74) Representative: **Grünecker Patent- und
Rechtsanwälte
PartG mbB
Leopoldstraße 4
80802 München (DE)**

(54) **ROBOT**

(57)      A robot (100) includes an umbrella portion, an emotion data acquirer, and a controller (110). The umbrella portion of the robot (100) enables a rotational movement and an opening/closing movement of an umbrella. The emotion data acquirer of the robot (100) acquires emotion data representing a pseudo emotion in accordance with an external stimulus. The controller (110) of the robot (100) controls at least one of a rotational movement and an opening/closing movement of an umbrella of the umbrella portion, based on the emotion data.

*FIG.5*

EP 4 201 609 A1

**Description**

The present disclosure relates generally to a robot.

Although various robots have been conventionally developed, in recent years, development of not only industrial robots but also consumer robots, such as a communication robot capable of communicating with a person, has progressed. There has been developed a communication robot for which body movements, voices, and expressions of the eyes that look like those of a person or an animal are employed as an expression method of the communication robot.

For example, in Unexamined Japanese Patent Application Publication No. 2002-307354, a humanoid or animal-like electronic robot in which a face display animation that changes a facial expression for each of modes "delight", "anger", "sad", and "pleasure" is provided and, further, sounds and motions are combined for each mode is disclosed. In addition, in Unexamined Japanese Patent Application Publication No. 2020-137687, a robot device that includes a light emitting-type emotional expression portion capable of rapidly or slowly changing the color of the white of the eye from a color to another color is disclosed.

The robot device disclosed in Unexamined Japanese Patent Application Publication No. 2002-307354 expresses each of the modes "delight", "anger", "sad", and "pleasure" by motions of both arms. In addition, the robot device disclosed in Unexamined Japanese Patent Application Publication No. 2020-137687 expresses emotions only by light emitting states of the white of the eye. Therefore, in both cases, the robot device uses only partial motions of a portion of the body and lacks in expressions appealing to the sensibility of a user and thus cannot cause the user to feel attachment to the robot device.

Accordingly, the present disclosure has been made in consideration of the above-described situation, and an objective of the present disclosure is to provide a robot capable of better appealing to the sensibility of a user and performing a movement causing the user to feel an attachment to the robot.

One aspect of a robot according to the present disclosure includes an umbrella portion capable of performing a rotational movement and an opening/closing movement of an umbrella, an emotion data acquirer to acquire emotion data representing a pseudo emotion in accordance with an external stimulus; and a controller to control, based on the emotion data, at least one of the rotational movement and the opening/closing movement of the umbrella of the umbrella portion.

Since the present disclosure enables an expression that uses the entire body dynamically and appeals to a visual sense and the like, it is possible to better appeal to the sensibility of a user and perform a movement that causes the user to feel an attachment to the robot.

A more complete understanding of this application can be obtained when the following detailed description is considered in conjunction with the following drawings, in which:

FIG. 1A is a diagram illustrating an external appearance of a robot according to an embodiment;
FIG. 1B is a diagram illustrating a cross section of the robot according to the embodiment;
FIG. 2A is a diagram illustrating a body portion of the robot according to the embodiment;
FIG. 2B is a diagram illustrating a sensor holder of the robot according to the embodiment;
FIG. 3A is a diagram illustrating an umbrella portion of the robot according to the embodiment;
FIG. 3B is a diagram illustrating a middle case of the robot according to the embodiment;
FIG. 4A is a diagram describing motion of a drive unit of the robot according to the embodiment and is a diagram illustrating an initial state;
FIG. 4B is another diagram describing the motion of the drive unit of the robot according to the embodiment and is a diagram illustrating a state in which an umbrella is rotated;
FIG. 4C is still another diagram describing the motion of the drive unit of the robot according to the embodiment and is a diagram illustrating a state in which the umbrella is being opened;
FIG. 4D is still another diagram describing the motion of the drive unit of the robot according to the embodiment and is a diagram illustrating a state in which the umbrella is fully opened;
FIG. 5 is a block diagram illustrating a functional configuration of the robot according to the embodiment;
FIG. 6 is a diagram describing an example of an emotion map according to the embodiment;
FIG. 7 is a diagram describing an example of a character value radar chart according to the embodiment;
FIG. 8 is a flowchart of movement control processing according to the embodiment;
FIG. 9A is a diagram illustrating an example of a relationship between an emotion map and an opening/closing movement and a rotational movement of the umbrella according to the embodiment;
FIG. 9B is a diagram illustrating an example of a relationship between colors of light and the emotion map according to the embodiment;
FIG. 10A is a diagram illustrating a state in which the robot according to the embodiment opens and closes or rotates the umbrella in accordance with an emotion and is a diagram illustrating a state in which the umbrella is closed;
FIG. 10B is another diagram illustrating a state in which the robot according to the embodiment opens and closes or rotates the umbrella in accordance with an emotion and is a diagram illustrating a state in which the umbrella is rotated;
FIG. 10C is still another diagram illustrating a state in which the robot according to the embodiment opens and closes or rotates the umbrella in accordance with an emotion and is a diagram illustrating a state in which the umbrella is being opened;

FIG. 10D is still another diagram illustrating a state in which the robot according to the embodiment opens and closes or rotates the umbrella in accordance with an emotion and is a diagram illustrating another state in which the umbrella is being opened;

FIG. 10E is still another diagram illustrating a state in which the robot according to the embodiment opens and closes or rotates the umbrella in accordance with an emotion and is a diagram illustrating still another state in which the umbrella is being opened; and

FIG. 10F is still another diagram illustrating a state in which the robot according to the embodiment opens and closes or rotates the umbrella in accordance with an emotion and is a diagram illustrating a state in which the umbrella is fully opened.

An embodiment of the present disclosure is described below with reference to the drawings. Note that, in the drawings, the same or equivalent constituent elements are designated by the same reference numerals.

Embodiment

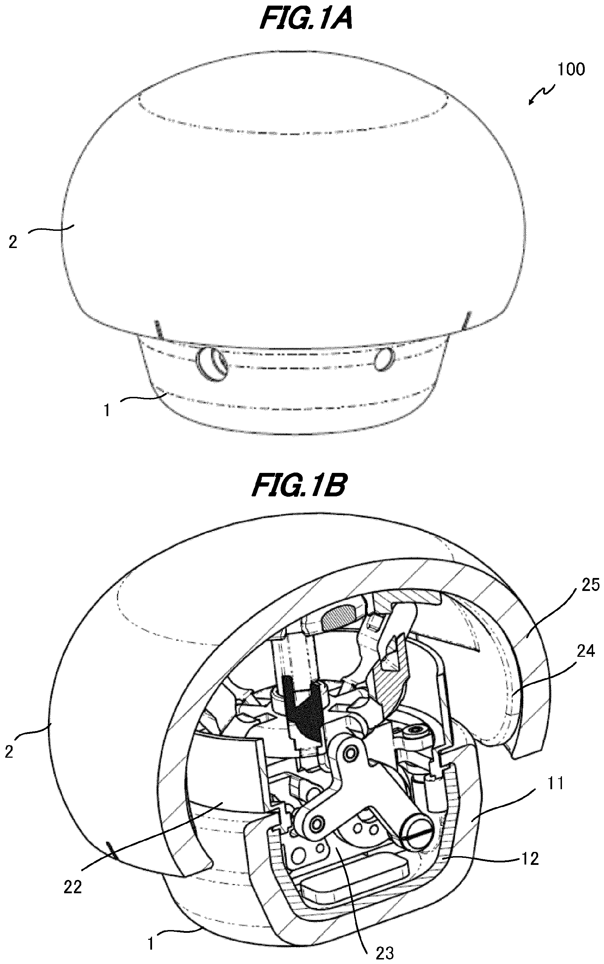

FIG. 1A illustrates an external appearance of a robot 100 according to the embodiment of the present disclosure. The robot 100 is a pet robot that imitates a small animal and includes a body portion 1 and an umbrella portion 2. The umbrella portion 2 performs a movement of rotating an umbrella about the body portion 1 and a movement of opening the umbrella, as described later. FIG. 1B illustrates a cross section of the robot 100. The body portion 1 is covered by a lower exterior 11. Inside the lower exterior 11, a lower case 12 is housed. The umbrella portion 2 includes a middle case 22, a drive unit 23 that drives the umbrella in order to rotate and open the umbrella, and a plurality of fins 24 that is rotatable vertically and horizontally about a top portion of the umbrella portion 2, and the fins 24 are covered by an upper exterior 25. The fins 24 and the upper exterior 25 constitute the umbrella. The lower exterior 11 and the upper exterior 25 are made of, for example, a material having an elongation percentage of not less than 200% and a hardness of not more than 5 on the Asker-C hardness scale, that is, a material that is extremely soft and can be elongated. Therefore, the entire upper exterior 25 is deformed in accordance with motion of the fins 24. In addition, the fins 24 and the upper exterior 25 are semitransparent in such a way that internal light is transmitted to the outside.

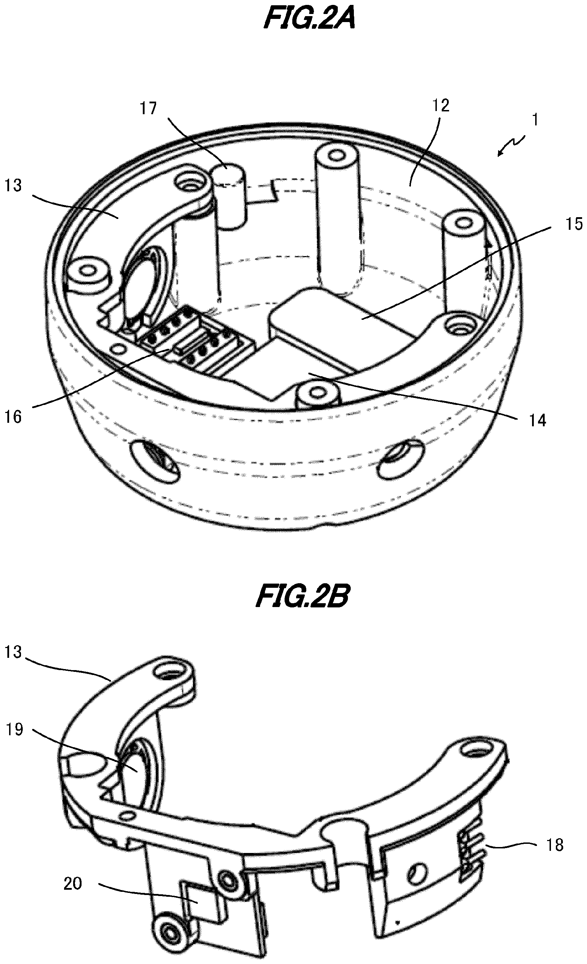

FIG. 2A illustrates the body portion 1, and, inside the body portion 1, the lower case 12, a sensor holder 13 that houses and fixes various types of sensors in the lower case 12, a circuit 14 that drive-controls the robot 100, a battery 15 that supplies power, a triaxial acceleration sensor 16 that detects acceleration of the robot 100 in three axial directions, and an illuminance sensor 17 that senses illuminance around the robot 100 are incorporated. FIG. 2B illustrates the sensor holder 13, and, on the sensor holder 13, a microphone 18 that collects a voice and the like of a person present around the robot 100, a speaker 19 that makes a sound, a voice, or the like from the robot 100, and a pyroelectric sensor 20 that detects that a person or the like has come close to the robot 100 are mounted.

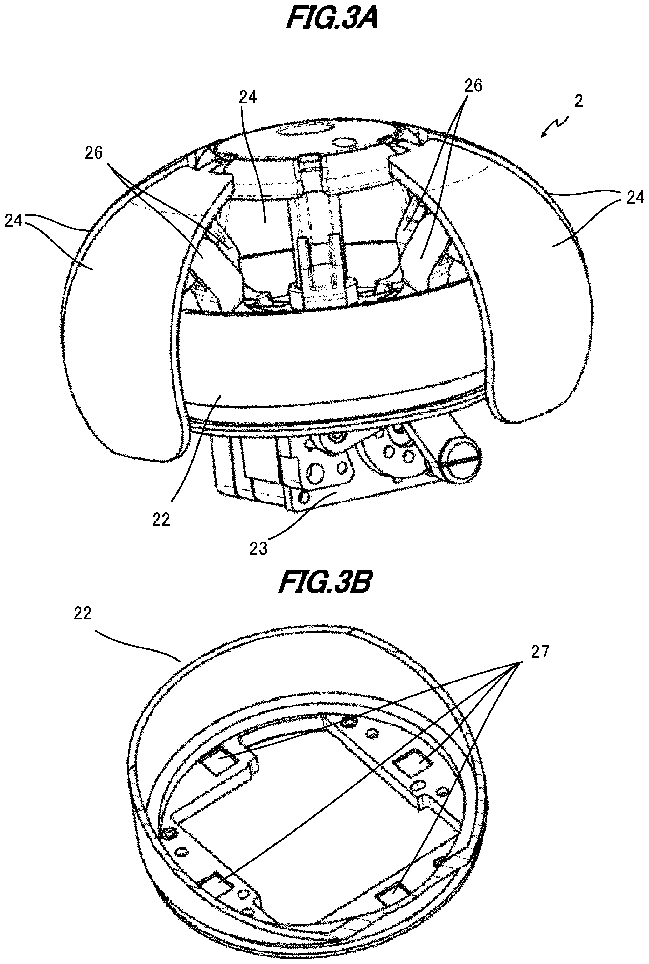

FIG. 3A illustrates the umbrella portion 2, and, inside the middle case 22, the drive unit 23 is arranged. On the drive unit 23, fin levers 26 are disposed, and the fins 24 are coupled to the fin levers 26. Note that, although some of the fin levers 26 and the fins 24 are omitted in the drawing for convenience of description, six fin levers 26 are disposed and six fins 24 are respectively coupled to the fin levers 26. The fins 24 perform an opening movement in accordance with movements of the fin levers 26. FIG. 3B illustrates the middle case 22, and four light emitting diodes (LEDs) 27 that serve as a light emitting portion are respectively arranged on the four sides of the middle case 22. Light emitted from the LEDs 27 is transmitted through the fins 24 and the upper exterior 25, which are semitransparent, and causes the body of the robot 100 to glow.

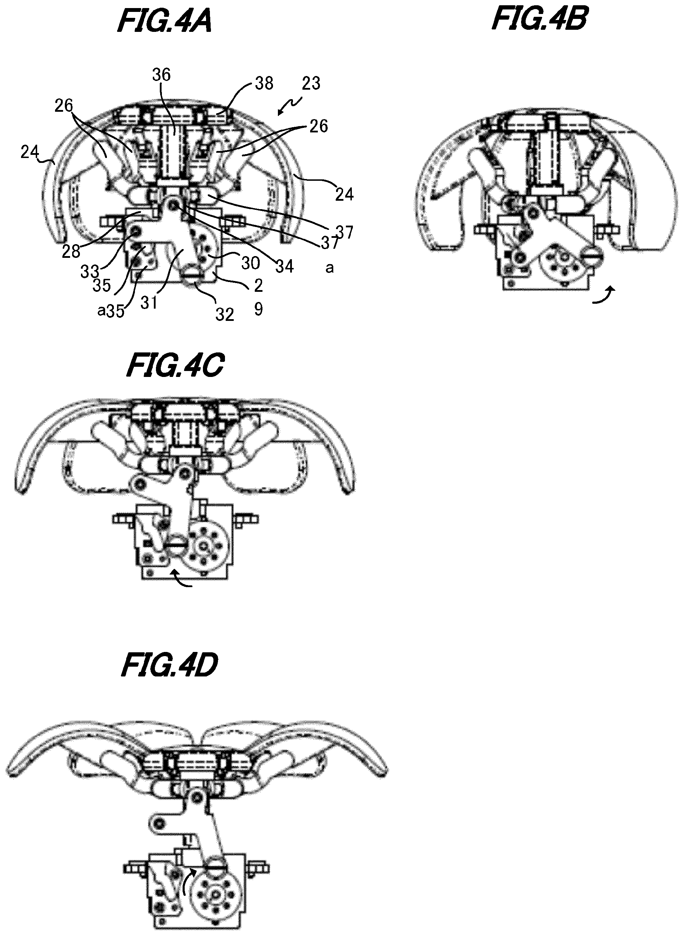

FIG. 4 illustrates diagrams describing motion of the drive unit 23. FIG. 4A illustrates a case where the drive unit 23 is in an initial state. The drive unit 23 includes a motor frame 28 for mounting a motor, a servo motor 29 that is mounted and fixed to the motor frame 28, and a wheel 30 that is mounted at a tip of a rotation shaft of the servo motor 29 and rotates in accordance with rotation of the servo motor 29. To the wheel 30, one end of a lever 31 is attached by a lever screw 32. The lever 31 is axially supported by the lever screw 32 in a freely rotatable manner. The other end of the lever 31 bifurcates, and, to one of the bifurcated end portions, a circular column-shaped lever shaft 33 that projects toward the inside is attached and, to the other of the bifurcated end portions, a sphere-shaped lever shaft 34 that projects toward the inside is attached. To the servo motor 29, a level cam 35 is disposed, and, in the level cam 35, a cam groove 35a that is a groove formed in the obliquely upper left direction and into which the lever shaft 33 is to be fitted is formed. The lever shaft 33 slides along the cam groove 35a in association with rotation of the wheel 30.

In addition, to the motor frame 28, a shaft 36 that extends upward and a slider 37 that is formed in a disk shape and in which a hole through which the slider 37 is to be fitted onto the shaft 36 is formed at the center are disposed. The slider 37 fitted onto the shaft 36 is movable in the vertical direction along the shaft 36 and rotatable about the shaft 36. On the circumferential surface of the slider 37, a cam groove 37a into which the lever shaft 34 is to be fitted is formed. The lever shaft 34 slides within the cam groove 37a in association with the rotation of the wheel 30. In addition, to the slider 37, one ends of the fin levers 26 are attached while being axially supported in a rotatable manner. On the other hand, the other ends of the fin levers 26 are attached to lower portions of the fins 24 while being axially supported in a rotatable manner. Upper-side end portions of the fins 24 are attached to a disk-shaped upper block 38 that is attached to an upper-side end portion of the shaft 36, while being axially supported in a rotatable manner. The upper block 38, as with the slider 37, is rotatable about the shaft 36. Therefore, the fins 24 are configured to be rotatable in conjunction with the slider 37. All of six pairs of a fin 24 and a fin lever 26 are attached in the same manner.

The lever shaft 34, which slides within the cam groove 37a, moves the slider 37 in the vertical direction along the shaft 36 or in the horizontal direction about the shaft 36 in association with the rotation of the wheel 30. The fin levers 26 move in the vertical direction in association with the vertical movement of the slider 37 and, in association therewith, the fins 24 also rotationally move in the vertical direction about the upper block 38, which enables the umbrella to be opened and closed. The structure described above enables rotation of the servo motor 29 to move the fins 24 in the rotational direction and the direction in which the fins 24 are opened.

Next, a movement in which the robot 100 rotates the umbrella and a movement in which the robot 100 opens and closes the umbrella are described.

First, the rotational movement is described. When the umbrella is to be rotated right, the servo motor 29 is rotated from an initial position in the initial state illustrated in FIG. 4A in a counterclockwise direction, as illustrated in FIG. 4B. Then, the wheel 30 rotates in a counterclockwise direction, and the lever shaft 33 moves in the obliquely lower right direction along the cam groove 35a of the level cam 35. Therefore, the lever shaft 34, which is attached to the lever 31, moves leftward and pushes the slider 37 leftward. Then, the slider 37 rotates right, that is, rotates in a clockwise direction, about the shaft 36. The slider 37 rotating right causes the fins 24, that is, the umbrella, to rotate right. Conversely, when the servo motor 29 is rotated in a clockwise direction in such a way as to return the state in FIG. 4B to the state in FIG. 4A, the slider 37 rotating left, that is, rotating in a counterclockwise direction, about the shaft 36 causes the fins 24, that is, the umbrella, to rotate left. Repeating the movements of causing the servo motor 29 to rotate in the counterclockwise direction from the initial position and subsequently to return in the clockwise direction as described above causes the umbrella to repeatedly rotate in the horizontal directions.

Next, the movement in which the umbrella is opened is described. When the umbrella is to be opened, the servo motor 29 is rotated from the initial position in the initial state illustrated in FIG. 4A in the clockwise direction, as illustrated in FIG. 4C. Then, the wheel 30 rotates in a clockwise direction, and the lever shaft 34 pushes the slider 37 upward. The slider 37 being pushed upward along the shaft 36 causes the fin levers 26 to be pushed up and, in association therewith, the fins 24 to be also pushed up, which causes the fins 24 to move in such a manner as to rotate upward about the upper block 38 as an axis and thereby open. When the servo motor 29 further rotating causes the lever screw 32 to reach the highest position, the fins 24, that is, the umbrella, is brought to a state of being fully opened, as illustrated in FIG. 4D. Conversely, when the servo motor 29 is rotated in the counterclockwise direction in such a manner that the state in FIG. 4D is returned to the state in FIG. 4A by way of the state in FIG. 4C, the slider 37 being pushed downward along the shaft 36 causes the fin levers 26 to be pushed down and the fins 24 to be also pushed down, which causes the fins 24, that is, the umbrella, to move in such a manner as to close. Repeating the movements in which the servo motor 29 rotates in the clockwise direction from the initial position and subsequently returns in the counterclockwise direction as described above causes the fins 24 to repeat opening/closing movements. The fins 24 perform movements of rotating laterally, opening, and closing, controlled by a control circuit. Speed, the amount of movement, and movement positions of the respective movements are arbitrarily controlled. Examples of such movements include rapid motion, slow motion, and motion the speed of which gradually changes. Needless to say, motion that imitates movements of an animal, such as a movement like breathing, a movement like shaking, a movement like being surprised, can also be performed.

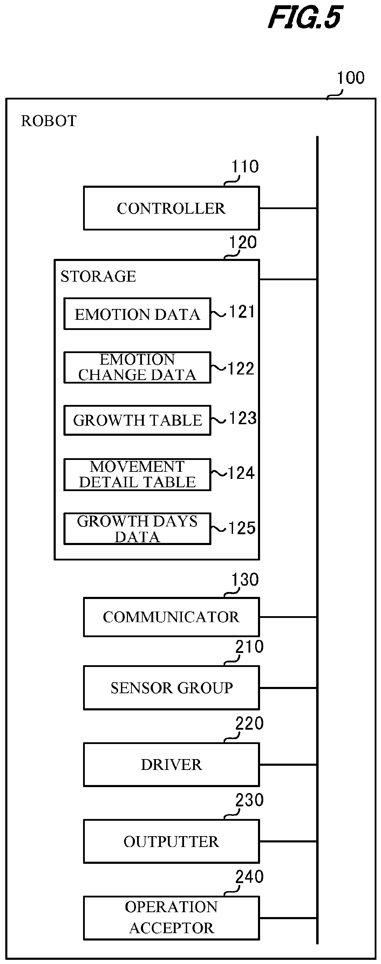

Next, a functional configuration of the robot 100 is described. The robot 100 includes a controller 110, a storage 120, a communicator 130, a sensor group 210, a driver 220, an outputter 230, and an operation acceptor 240, as illustrated in FIG. 5.

The controller 110 is configured by, for example, a central processing unit (CPU) or the like and executes various types of processing, which are described later, by executing programs stored in the storage 120. Note that, since the controller 110 has a capability of performing a multi-thread function in which a plurality of pieces of processing is performed in parallel with one another, the controller 110 is capable of executing various types of processing, which are described later, in parallel with one another. The controller 110 also has a clock function and a timer function and is capable of timing a date and time and the like.

The storage 120 includes a read only memory (ROM), a flash memory, a random access memory (RAM), and the like. In the ROM, programs that the CPU of the controller 110 executes and data that are required in advance for the CPU to execute the programs are stored. A flash memory is a writable non-volatile memory, and data that need to be saved after power is cut off are stored in the flash memory. In the RAM, data that are generated or changed during execution of programs are stored. The storage 120 stores, for example, emotion data 121, emotion change data 122, and a growth table 123, which are described later.

The communicator 130 includes a communication module compatible with a wireless local area network (LAN), Bluetooth (registered trademark), or the like and performs data communication with an external device, such as a smartphone.

The sensor group 210 includes the afore-described pyroelectric sensor 20, triaxial acceleration sensor 16, illuminance sensor 17, and microphone 18. The controller 110 acquires detected values detected by various types of sensors that the sensor group 210 includes as external stimulus data that represent external stimuli acting on the robot 100. Note that the sensor group 210 may include a sensor other than the pyroelectric sensor 20, the triaxial acceleration sensor 16, the illuminance sensor 17, and the microphone 18. Increasing the types of sensors that the sensor group 210 includes enables the types of external stimuli that the controller 110 can acquire to be increased. For example, the sensor group 210 may include an image acquirer, such as a charge-coupled device (CCD) image sensor. In this case, the controller 110 becomes capable of, by recognizing an image that the image acquirer acquired, determining who a person present around the robot 100 is (for example, an owner of the robot 100, a person who always takes care of the robot 100, or a stranger).

The pyroelectric sensor 20 is capable of detecting that a person has moved and, for example, is capable of detecting that a person is coming close to the robot 100. The pyroelectric sensor 20 is configured by an infrared sensor that detects infrared rays emitted from an object, such as a human body, using pyroelectric effect. The controller 110 detects how close the object has come to the robot 100, based on a detected value from the pyroelectric sensor 20.

The triaxial acceleration sensor 16 detects acceleration in three axial directions that are composed of the front-rear direction, the width (right-left) direction, and the vertical direction of the robot 100. Since the triaxial acceleration sensor 16 detects gravitational acceleration when the robot 100 is standing still, the controller 110 is capable of detecting a current attitude of the robot 100, based on gravitational acceleration that the triaxial acceleration sensor 16 detected. In addition, when, for example, a user lifts up, lightly rubs, or slaps the robot 100, the triaxial acceleration sensor 16 detects acceleration associated with movement of the robot 100 in addition to gravitational acceleration. Therefore, the controller 110 is capable of detecting a change in the attitude of the robot 100, by removing a gravitational acceleration component from a detected value that the triaxial acceleration sensor 16 detected. Based on a detected value of the triaxial acceleration sensor 16, external stimuli, such as the robot 100 being rubbed and slapped by the user, can be detected. Note that the controller 110 may detect such external stimuli using a sensor other than the triaxial acceleration sensor 16, such as a touch sensor.

The illuminance sensor 17 senses illuminance around the robot 100. The illuminance sensor 17 is also capable of recognizing a level of illuminance. Since the controller 110 is capable of determining whether it has gradually become bright or rapidly become bright because the illuminance sensor 17 constantly senses illuminance, the controller 110 is also capable of detecting, for example, that the user turned on a light in the night.

The microphone 18 detects sound around the robot 100. The controller 110 is capable of detecting, for example, that the user is speaking to the robot 100, that the user is clapping his/her hands, or the like, based on components of the sound that the microphone 18 detected.

The driver 220 includes the servo motor 29 as a movable portion to express motion of the robot 100 and is driven by the controller 110. The controller 110 controlling the driver 220 enables the robot 100 to express movements, such as opening the umbrella and rotating the umbrella. Movement control data for performing such movements are recorded in the storage 120, and the movement of the robot 100 is controlled based on detected external stimuli, a growth value, which is described later, and the like.

Note that the above-described configuration is only an example of the driver 220, and the driver 220 may include wheels, crawlers, hands and feet, or the like and the robot 100 may be capable of moving in an arbitrary direction or arbitrarily moving the body thereof.

The outputter 230 includes the speaker 19, and the controller 110 inputting sound data in the outputter 230 causes a sound to be output from the speaker 19. For example, the controller 110 inputting voice data of the robot 100 in the outputter 230 causes the robot 100 to emit a pseudo voice. The voice data are also recorded in the storage 120, and a type of voice is selected based on a detected external stimulus, a growth value, which is described later, and the like.

The outputter 230 also includes the LEDs 27 and causes the LEDs 27 to emit light, based on a detected external stimulus, a growth value, which is described later, and the like. Since each of the LEDs 27 produces three primary colors (red, green, and blue) in 256 gradations for each color, the LEDs 27 are capable of representing 16 million or more colors. As with movements, any lighting patterns, such as rapid on/off flashing, slow on/off flashing, and lighting gradually changing color, can be achieved by control. In addition, the robot 100 may include, instead of the LEDs 27, a display, such as a liquid crystal display, as the outputter 230 and may display an image based on a detected external stimulus, a growth value, which is described later, and the like on the display.

The operation acceptor 240 includes, for example, an operation button and a volume knob. The operation acceptor 240 is an interface for accepting an operation performed by the user, such as power on or power off and adjustment of the volume of output sound. Note that, in order to increase a feeling as if the robot 100 were a living thing, the robot 100 does not have to include, as the operation acceptor 240, any component, such as an operation button and a volume knob, except a power switch, which is disposed on the inner side of the exterior. Even in this case, an operation of the robot 100, such as adjustment of the volume of output sound, can be performed using an external device, such as a smartphone, that is connected to the robot 100 via the communicator 130.

Next, among data to be stored in the storage 120, the emotion data 121, the emotion change data 122, the growth table 123, a movement detail table 124, and growth days data 125, which are data required for determining a general movement to be determined based on a growth value and the like, are described in sequence.

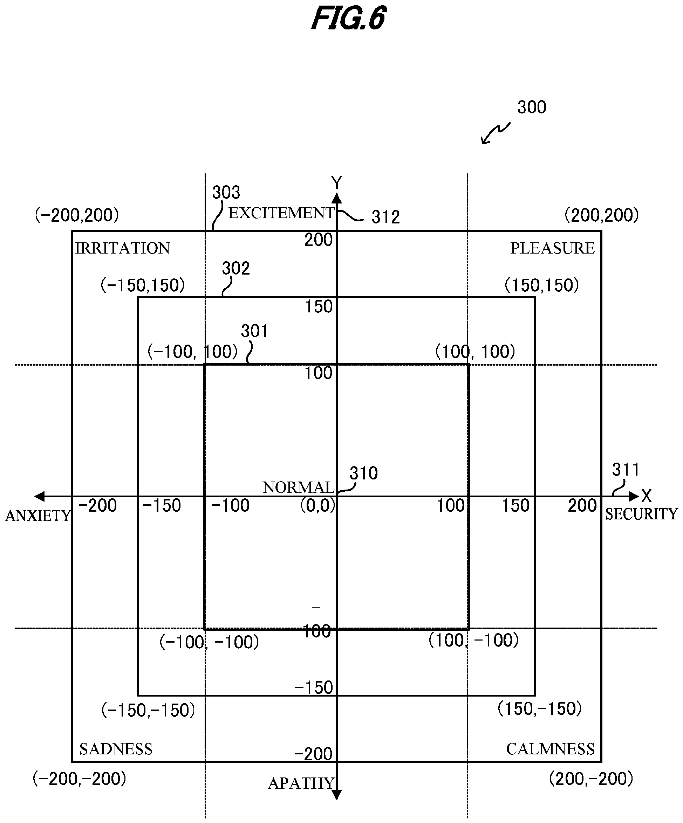

The emotion data 121 are data for causing the robot 100 to have a pseudo emotion and are data (X, Y) representing coordinates on an emotion map 300. The emotion map 300 indicates a distribution of emotion and, as illustrated in FIG. 6, is represented by a two-dimensional coordinate system having an axis of security level (anxiety level) as an X-axis 311 and an axis of excitement level (apathy level) as a Y-axis 312. An origin 310 (0, 0) on the emotion map 300 represents a normal emotion. As the absolute value of a value of the X-coordinate (X value) that is positive becomes larger, an emotion with a higher security level is represented, and, as the absolute value of a value of the Y-coordinate (Y value) that is positive becomes larger, an emotion with a higher excitement level is represented. In addition, as an absolute value of an X value that is negative becomes larger, an emotion with a higher anxiety level is represented, and, as an absolute value of a Y value that is negative becomes larger, an emotion with a higher apathy level is represented.

Note that, although, in FIG. 6, the emotion map 300 is represented by the two-dimensional coordinate system, the number of dimensions of the emotion map 300 is arbitrary. It may be configured such that the emotion map 300 is defined in one dimension and one value is set as the emotion data 121. It may also be configured such that the emotion map 300 is defined by a coordinate system having three or more dimensions by adding another axis and values the number of which is equal to the number of dimensions of the emotion map 300 are set as the emotion data 121.

In the present embodiment, the size of the emotion map 300 as an initial value is defined by the maximum value of 100 and the minimum value of -100 with respect to both the X value and the Y value, as illustrated by a frame 301 in FIG. 6. During a first period, every time pseudo growth days of the robot 100 increase by one day, both the maximum value and the minimum value of the emotion map 300 are expanded by 2. In this configuration, the first period is a period during which the robot 100 grows in a pseudo manner and is, for example, a period of 50 days from the pseudo birth of the robot 100.

Note that the pseudo birth of the robot 100 is the first activation of the robot 100 after the robot 100 was shipped from a factory. When the number of growth days reaches 25 days, both the X value and the Y value have the maximum value of 150 and the minimum value of -150, as illustrated by a frame 302 in FIG. 6. Subsequently, after a lapse of the first period (50 days in this example), both the X value and the Y value have the maximum value of 200 and the minimum value of -200, as illustrated by a frame 303 in FIG. 6, and, under the assumption that the pseudo growth of the robot 100 is completed due to the lapse of the first period, the size of the emotion map 300 is fixed.

The emotion change data 122 are data for setting the amount of change that increases or decreases each of the X value and the Y value of the emotion data 121. In the present embodiment, the emotion change data 122 include, as emotion change data corresponding to the X value of the emotion data 121, DXP that increases the X value and DXM that decreases the X value, and, as emotion change data corresponding to the Y value, DYP that increases the Y value and DYM that decreases the Y value. That is, the emotion change data 122 are composed of the following four variables and are data indicating a degree to which pseudo emotion of the robot 100 is changed.

DXP: Easiness to feel secure (easiness for the X value to change in the positive direction on the emotion map)

DXM: Easiness to feel anxious (easiness for the X value to change in the negative direction on the emotion map)

DYP: Easiness to feel excited (easiness for the Y value to change in the positive direction on the emotion map)

DYM: Easiness to feel apathetic (easiness for the Y value to change in the negative direction on the emotion map)

In the present embodiment, initial values of all of these variables are, as an example, set to 10, and the values of the variables are assumed to increase up to 20 by performing training processing of emotion change data in movement control processing, which is described later. Since the training processing causes the emotion change data 122, that is, degrees to which emotion changes, to change, the robot 100 is to have various characters depending on a manner in which the user deals with the robot 100. In other words, each of the characters of the robot 100 is to be differently formed depending on a manner in which the user deals with the robot 100.

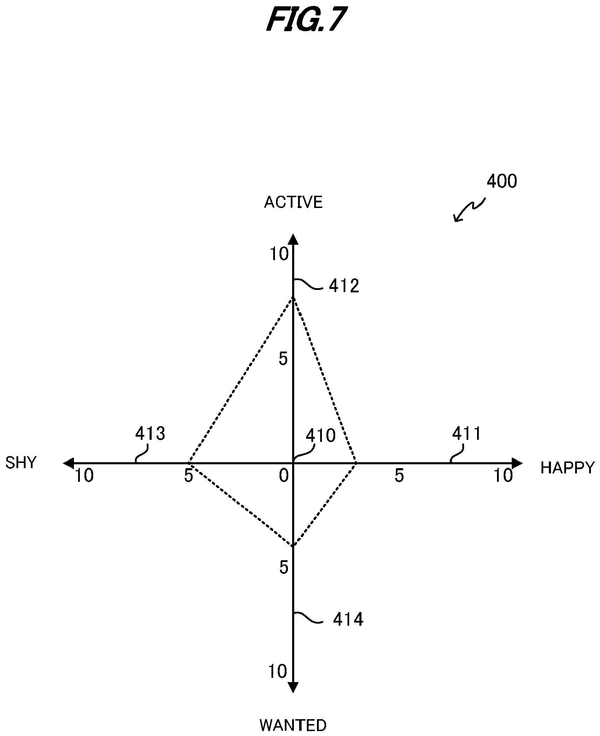

Thus, in the present embodiment, each piece of character data (character value) is derived by subtracting 10 from a corresponding piece of the emotion change data 122. That is, a value obtained by subtracting 10 from DXP, which indicates an easiness to feel secure, is defined as a character value "happy", a value obtained by subtracting 10 from DXM, which indicates an easiness to feel anxious, is defined as a character value "shy", a value obtained by subtracting 10 from DYP, which indicates an easiness to feel excited, is defined as a character value "active", and a value obtained by subtracting 10 from DYM, which indicates an easiness to feel apathetic, is defined as a character value "wanted". Because of this configuration, for example, a character value radar chart 400 can be generated by plotting the character value "happy", the character value "active", the character value "shy", and the character value "wanted" on an axis 411, an axis 412, an axis 413, and an axis 414, respectively, as illustrated in FIG. 7.

Since an initial value of each character value is 0, the initial character of the robot 100 is represented by an origin 410 of the character value radar chart 400. As the robot 100 grows, each character value changes up to a limit of 10 due to external stimuli and the like (a manner in which the user deals with the robot 100) detected by the sensor group 210. When the four character values change in a range from 0 to 10 as in the present embodiment, 11 to the power of four, that is, 14641, types of characters can be expressed.

In the present embodiment, the largest value among the four character values is used as growth degree data (growth value) that indicate a degree of pseudo growth of the robot 100. The controller 110 performs control in such a way that variations are produced in movement details of the robot 100 as the robot 100 grows in a pseudo manner (as the growth value increases). Data that the controller 110 uses for this purpose is the growth table 123.

In the growth table 123, the type of each of movements that the robot 100 performs in accordance with a movement trigger, such as an external stimulus detected by the sensor group 210, and a probability that the movement is selected depending on the growth value (hereinafter, referred to as a "movement selection probability") are recorded. Note that the movement trigger is information of an external stimulus or the like that serves as an event causing the robot 100 to perform some movement. The movement selection probabilities are set such that, while the growth value is small, a basic movement that is set in accordance with a movement trigger is selected regardless of a character value and, when the growth value increases, a character movement that is set in accordance with a character value is selected. The movement selection probabilities are also set such that, as the growth value increases, the types of selectable basic movements increase.

The movement detail table 124 is a table in which a specific movement detail of each movement type defined in the growth table 123 is recorded. Note, however, that, with regard to character movements, a movement detail is defined for each type of character. Note that the movement detail table 124 is not essential data. For example, the movement detail table 124 is not required when the growth table 123 is configured in a form in which specific movement details are directly recorded in a movement type column in the growth table 123.

The initial value of the growth days data 125 is 1, and the growth days data 125 are incremented by 1 each time one day elapses. The growth days data 125 enables pseudo growth days (the number of days since the pseudo birth) of the robot 100 to be represented.

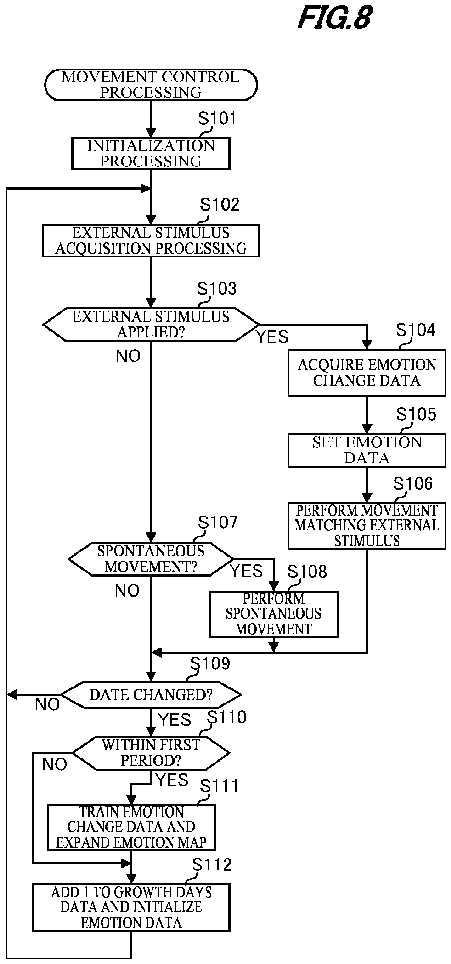

Next, referring to a flowchart illustrated in FIG. 8, the movement control processing that the controller 110 of the robot 100 executes is described. The movement control processing is processing in which the controller 110 controls the movement (a motion, a voice, and the like) of the robot 100, based on detected values from the sensor group 210 and the like. When the user powers on the robot 100, execution of a thread of the movement control processing is started in parallel with other necessary processing. The driver 220 and the outputter 230 are controlled by the movement control processing and, through this control, a motion of the robot 100 is expressed, light is emitted from the robot 100, or a sound, such as a voice, is output from the robot 100.

First, the controller 110 initializes various types of data, such as the emotion data 121, the emotion change data 122, and the growth days data 125 (step S101).

Next, the controller 110 executes processing of acquiring external stimuli from various types of sensors that the sensor group 210 includes (step S102).

Next, the controller 110 determines whether or not an external stimulus detected by the sensor group 210 has been applied (step S103).

When an external stimulus has been applied (step S103; Yes), the controller 110 acquires the emotion change data 122 that are to be added to or subtracted from the emotion data 121 depending on the external stimulus acquired from the various types of sensors (step S104). Specifically, for example, since the robot 100 feels pseudo security when the robot 100 detects, as an external stimulus, that the robot 100 is rubbed, by the triaxial acceleration sensor 16, the controller 110 acquires DXP as the emotion change data 122 to be added to the X value of the emotion data 121.

Next, the controller 110 sets the emotion data 121 in accordance with the emotion change data 122 acquired in step S104 (step S105). This processing causes the controller 110 to acquire the emotion data 121 that are updated in accordance with an external stimulus, and, because of this configuration, the controller 110 constitutes an emotion data acquirer. Specifically, when, for example, DXP is acquired as the emotion change data 122 in step S104, the controller 110 adds the DXP, which is the emotion change data 122, to the X value of the emotion data 121. Note, however, that, when addition of the emotion change data 122 causes the value (the X value or the Y value) of the emotion data 121 to exceed the maximum value of the emotion map 300, the value of the emotion data 121 is set to the maximum value of the emotion map 300. In addition, when subtraction of the emotion change data 122 causes the value of the emotion data 121 to be less than the minimum value of the emotion map 300, the value of the emotion data 121 is set to the minimum value of the emotion map 300.

Although, in steps S104 and S105, what type of emotion change data 122 are acquired and used for setting the emotion data 121 with respect to each external stimulus can be arbitrarily set, examples are described hereinbelow. Note that, since, for the X value and the Y value of the emotion data 121, maximum values and minimum values are defined depending on the size of the emotion map 300, a maximum value and a minimum value are set to the X value or the Y value when the X value or the Y value calculated in accordance with the following procedures exceeds the maximum value and when the X value or the Y value falls below the minimum value, respectively.

A light is turned on (the robot 100 becomes calm): $X = X + DXP$ and $Y = Y - DYM$

(This external stimulus can be detected by the illuminance sensor 17)

The user comes close to the robot 100 (the robot 100 is pleased): $X = X + DXP$ and

$$Y = Y + DYP.$$

The user moves away from the robot 100 (the robot 100 is sad): $X = X - DXM$ and

$$Y = Y - DYM.$$

(These external stimuli can be detected by the pyroelectric sensor 20)

The robot 100 is gently rubbed (the robot 100 is pleased): $X = X + DXP$ and $Y = Y + DYP$.

The robot 100 is slapped (the robot 100 is sad: $X = X - DXM$ and $Y = Y - DYM$

The robot 100 is lifted up with the umbrella pointing upward (the robot 100 is excited): $Y = Y + DYP$.

The robot 100 is suspended in midair with the umbrella pointing downward (the robot 100 becomes apathetic): $Y = Y - DYM$

(These external stimuli can be detected by the triaxial acceleration sensor 16)

The robot is called in a gentle voice (the robot 100 becomes calm): $X = X + DXP$ and $Y = Y - DYM$

The robot 100 is yelled at loudly (the robot 100 is irritated): $X = X - DXM$ and $Y = Y + DYP$.

(These external stimuli can be detected by the microphone 18)

The controller 110 executes a movement corresponding to an external stimulus (step S106) and proceeds to step S109.

In contrast, when it is determined that no external stimulus has been applied in step S103 (step S103; No), the controller 110 determines whether or not the robot 100 performs a spontaneous movement, such as a breathing movement (step S107). Although any method can be used as a method for determining whether or not the robot 100 performs a spontaneous movement, it is assumed in the present embodiment that the determination in step S107 results in Yes at each breathing period (for example, every 2 seconds) and the breathing movement is performed.

The breathing movement is, for example, a movement in which the umbrella in the umbrella portion 2 is slowly opened and subsequently returned to the original position. At the same time, the LEDs 27 may be configured to slightly emit light or the speaker 19 may be configured to emit a breathing sound. Performing a spontaneous movement as described above when no external stimulus has been applied enables the reality of the robot 100 as a living thing to be better expressed and the user to feel an attachment to the robot 100.

When the controller 110 determines that the robot 100 performs a spontaneous movement (step S107; Yes), the controller 110 executes the spontaneous movement (for example, a breathing movement) (step S108) and proceeds to step S109.

When the controller 110 determines that the robot 100 does not perform a spontaneous movement (step S107; No), the controller 110 determines whether or not the date has changed, using a clock function (step S109). When the date has not changed (step S109; No), the controller 110 returns to step S102.

When the date has changed (step S109; Yes), the controller 110 determines whether or not the current time is within the first period (step S110). When it is assumed that the first period is a period of, for example, 50 days since the pseudo birth (for example, the first activation by the user after purchase) of the robot 100, the controller 110 determines that the current time is within the first period when the growth days data 125 is less than or equal to 50. When the current time is not within the first period (step S110; No), the controller 110 proceeds to step S112.

When the current time is within the first period (step S110; Yes), the controller 110 performs training of the emotion change data 122 and expands the emotion map (step S111). The training of the emotion change data 122 is specifically processing of, when, in step S105 on the previous day, the X value of the emotion data 121 was set to the maximum value of the emotion map 300 even once, the Y value of the emotion data 121 was set to the maximum value of the emotion map 300 even once, the X value of the emotion data 121 was set to the minimum value of the emotion map 300 even once, and the Y value of the emotion data 121 was set to the minimum value of the emotion map 300 even once, updating the emotion change data 122 by adding 1 to DXP of the emotion change data 122, adding 1 to DYP of the emotion change data 122, adding 1 to DXM of the emotion change data 122, and adding 1 to DYM of the emotion change data 122, respectively.

Note, however, that, since, when each value of the emotion change data 122 becomes too large, the amount of change in the emotion data 121 per update becomes too large, each value of the emotion change data 122 is limited to, for example, less than or equal to the maximum value that is set to 20. In addition, although, in the present embodiment, it is assumed that 1 is added to any data in the emotion change data 122, a value to be added is not limited to 1. For example, it may be configured such that the number of times that each value of the emotion data 121 is set to the maximum value or the minimum value is counted and, when the number is large, a numerical value to be added to the emotion change data 122 is increased.

Returning to step S111 in FIG. 8, the expansion of the emotion map is specifically processing in which the controller 110 expands both the maximum value and the minimum value of the emotion map 300 by 2. Note, however, that the numerical value "2" by which the emotion map is expanded is only an example and the emotion map may be expanded by 3 or more or by 1. In addition, numerical values for expansion do not have to be the same for each axis and between the maximum value and the minimum value of the emotion map 300.

Next, the controller 110 adds 1 to the growth days data 125 and initializes both the X value and the Y value of the emotion data to 0 (step S112) and returns to step S102.

Next, emotional expressions in accordance with the emotion map 300 are described. The emotion of the robot 100 is expressed by an opening/closing movement and a rotational movement of the umbrella, change in color, intensity, and on-off patterns of light by the LEDs 27, an emitted sound, and the like.

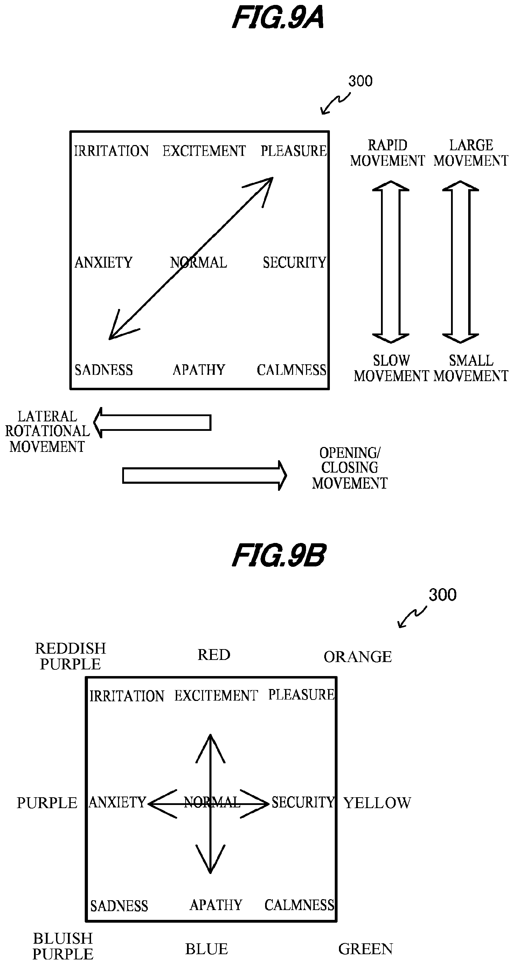

FIG. 9A illustrates an example of a relationship between the opening/closing movement and the rotational movement of the umbrella in accordance with the emotion map 300. The movement basically transitions on the emotion map 300, and a range, a position, speed, and the like of the transition change depending on a level of emotion. While the emotion is within a range from an anxious state to a secure state on the axis of security level (anxiety level), which is the horizontal axis (X-axis), the robot 100 performs a movement of opening and closing the umbrella. While the emotion is within a range from a normal state to the anxious state, the robot 100 performs a movement of rotating the umbrella laterally. In contrast, when the emotion transitions from an apathetic state to an excited state on the axis of excitement level (apathy level), which is the vertical axis (Y-axis), the motion of opening and closing the umbrella or rotating the umbrella changes in such a way as to become large, and, when the emotion transitions from the excited state to the apathetic state, the motion of opening and closing the umbrella or rotating the umbrella changes in such a way as to become small. In addition, when the emotion transitions from the apathetic state to the excited state, the motion of opening and closing the umbrella or rotating the umbrella changes in such a way as to become rapid, and, when the emotion transitions from the excited state to the apathetic state, the motion of opening and closing the umbrella or rotating the umbrella changes in such a way as to become slow.

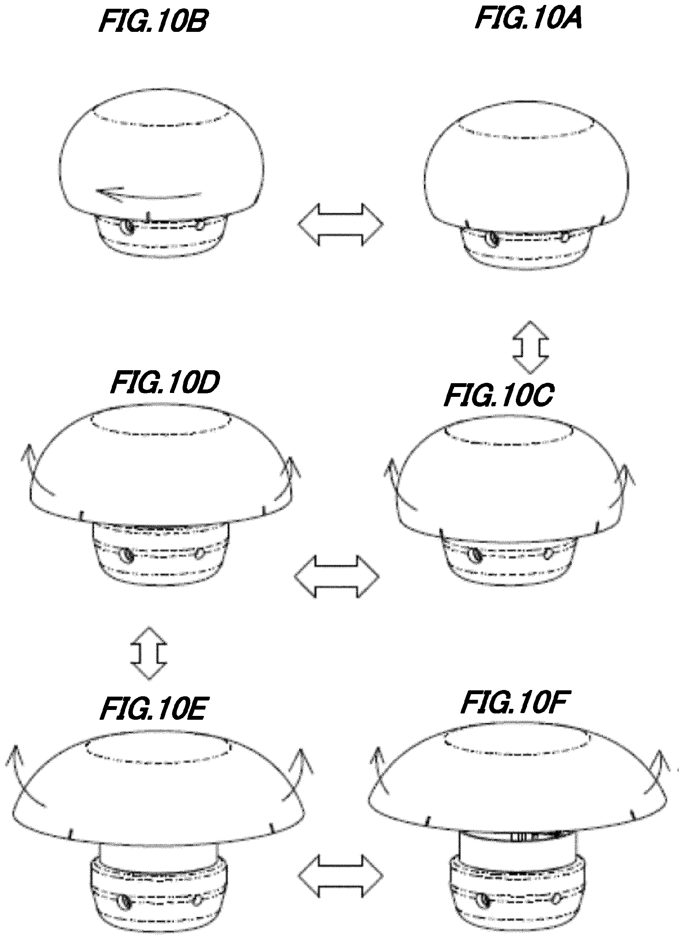

FIG. 10 illustrates a manner in which the opening/closing and rotation of the umbrella change in accordance with the emotion. FIG. 10A illustrates a state in which the umbrella of the robot 100 is closed. A case where, for example, the emotion changes from the normal state to a pleased state is described below. In the normal state, the robot 100 transitions from the state in FIG. 10A, in which the umbrella is closed, to a state in FIG. 10C in which the umbrella is slightly opened, and the umbrella is further opened until reaching a state in FIG. 10D. When the umbrella is brought to the state in FIG. 10D, the umbrella starts moving in the closing direction, and, conversely to the above-described movement, the umbrella is brought from the state in FIG. 10D to the state in FIG. 10C and returns to the state in FIG. 10A, in which the umbrella is closed. Thereafter, this movement is repeated. Succeedingly, when the emotion is in an intermediate state between the normal state and the pleased state, the robot 100 opens the umbrella, starting from the state in FIG. 10A, in which the umbrella is closed, until reaching a state in FIG. 10E via the states in FIGS. 10C and 10D. When the umbrella is brought to the state in FIG. 10E, the umbrella starts moving in the closing direction and, conversely to the above-described movement, returns to the state in FIG. 10A via the states in FIGS. 10D and 10C. The opening/closing movement at this time is performed at a higher speed and the umbrella is opened and closed more widely and rapidly than the normal state. Further, when the emotion is in the pleased state, the robot 100 transitions from the state in FIG. 10A, in which the umbrella is closed, to a state in FIG. 10F in which the umbrella is fully opened via the states in FIGS. 10C, 10D, and 10E. When the umbrella is brought to the state in FIG. 10F, the umbrella starts moving in the closing direction and returns to the state in FIG. 10A via the above-described states in the reverse order. The opening/closing movement at this time is performed at the highest speed, and the umbrella is opened and closed most widely and rapidly. Conversely, in the case where the emotion has transitioned to a sad state, when the robot 100 transitions from the state in FIG. 10A, in which the umbrella is closed, to the state in FIG. 10C, in which the umbrella is slightly opened, the umbrella starts moving in the closing direction and returns to the state in FIG. 10A. Further, the robot 100 proceeds to a state in FIG. 10B in which the robot 100 rotates the umbrella in the lateral direction with the umbrella closed. When the rotation is finished, the robot 100 proceeds to the state in FIG. 10C in the reverse order to the above-described order, and, thereafter, repeats this movement. The opening/closing and rotational movements at this time are performed at the lowest speed.

Returning to FIG. 9, succeedingly, an example of a relationship between the color of light emitted from the LEDs 27 and the emotion map 300 is illustrated in FIG. 9B. As for the color of light, the higher the security level is and the higher the excitement level is, the more the color changes to warm colors, and the higher the anxiety level is and the higher the apathy level is, the more the color changes to cold colors. As illustrated in FIG. 9B, the light from the LEDs 27 has a color tone mainly including orange color when the robot 100 is pleased, yellow color when the robot 100 feels secure, green color when the robot 100 is calm, red color when the robot 100 is excited, reddish purple color when the robot 100 is irritated, purple color when the robot 100 is anxious, and bluish purple color when the robot 100 is sad. In addition, the robot 100 changes not only the color but also the brightness of each color and the speed and pattern of lighting in accordance with the level of emotion. For example, the higher the excitement level is, the brighter the light is made or the faster the speed of lighting is made. In addition, the sound is also changed in accordance with the emotion as with the color and the movement. For example, the robot 100 speaks imitating a voice of an animal matching the emotion. The robot 100 may also be configured to pronounce cheerfully when the robot 100 is pleased and pronounce in a weak and faint voice when the robot 100 is sad. As described above, the robot 100 exhibits emotional expressions in a diverse and dynamic manner by use of a combination of movement, color development, and sound that are expressed using the entire body of the robot 100.

Next, specific examples of emotional expression corresponding to external stimuli are enumerated below. For example, when the room is dark, the illuminance sensor 17 detects that the light is off and the robot 100 is put into a sleep mode in which motion and light emission of the robot 100 are suspended. When the light is turned on while the robot 100 is in this state, the illuminance sensor 17 detects a rapid change in the illuminance because the illuminance sensor 17 constantly performs sensing and the robot 100 determines that the light is turned on. Then, the robot 100 lights the LEDs 27 in green for approximately one minute in such a manner as to assert the presence of the robot 100 itself and repeats a movement of opening the umbrella slightly and slowly and a movement of closing the umbrella. In addition, when the user comes close to the robot 100, the pyroelectric sensor 20 detects a person and, in response to the detection, the robot 100 causes the LEDs 27 to slowly emit orange light and, while repeating the opening/closing movement of the umbrella widely and slowly, pronounces in such a manner as to seek attention and shows an expression of a desire to be taken care of. In addition, when the user gently touches the umbrella of the robot 100, the triaxial acceleration sensor 16 detects the touch and, in response to the detection, the robot 100, while producing an orange color, pronounces in such a manner as to seek attention, repeats the opening/closing movement of the umbrella slowly and slightly, and, by including a repetitive rotational movement in the lateral direction, exhibits an expression of pleasure. On this occasion, the user is able to feel an attachment to the robot 100 through a visual sense, an auditory sense, and a tactile sense including a soft touch delivered to the hand. In addition, since the robot 100 grows up as the time elapses, the robot 100 comes to exhibit a different emotional expression depending on a formed character, such as coming to always exhibit a cheerful expression when the robot 100 is often dealt with by the user and coming to exhibit a lonely expression when the robot 100 is rarely dealt with.

Note that the present disclosure is not limited to the above-described embodiment and can be subjected to various modifications and applications, and details of emotions and expression methods are only examples. In addition, although the movements are assumed to include a movement of opening the umbrella, a movement of closing the umbrella, and a movement of rotating the umbrella laterally, another movement may be included.

In addition, the configuration of the emotion map 300 and the methods for setting the emotion data 121, the emotion change data 122, the character data, the growth value, and the like in the above-described embodiment are only examples. For example, as a simpler configuration, a numerical value obtained by dividing the growth days data 125 by a certain number (when the numerical value exceeds 10, the numerical value is always set to 10) may be set as a growth value.

In addition, although, in the above-described embodiment, it was configured such that the controller 110 to control the robot 100 is incorporated in the robot 100, the controller 110 to control the robot 100 does not necessarily have to be incorporated in the robot 100. For example, a control device (not illustrated) including a controller, a storage, and a communicator may be configured as a separate device (for example, a server) from the robot 100. In this variation, the communicator 130 of the robot 100 and the communicator of the control device are configured to be able to transmit and receive data to and from each other. The controller of the control device acquires external stimuli detected by the sensor group 210 and controls the driver 220 and the outputter 230 via the communicator of the control device and the communicator 130 of the robot 100.

Note that, when the control device and the robot 100 are configured by separate devices as described above, the robot 100 may be configured to be controlled by the controller 110 as needed basis. For example, it may be configured such that a simple movement is controlled by the controller 110 and a complex movement is controlled by the controller of the control device via the communicator 130, and the like.

In the above-described embodiment, movement programs that the CPU of the controller 110 executes are stored in the ROM and the like in the storage 120 in advance. However, the present disclosure is not limited to the configuration, and an existing general-purpose computer may be configured to function as a device equivalent to the controller 110 and the storage 120 of the robot 100 according to the above-described embodiment, by installing movement programs for causing the robot 100 to execute the above-described various types of processing in the computer.

In addition, it may be configured such that data relating to pseudo emotion, such as the emotion change data 122, the growth table 123, the movement detail table 124, and the growth days data 125, that are stored in the storage 120 can be acquired from an external device and edited by the external device. Specifically, data relating to pseudo emotion are acquired from the robot 100, using an application program installed in an information communication device, such as a smartphone, and are displayed on a display screen of the application. Further, it may be configured such that displayed data are edited by the user and subsequently sent to the robot 100.

Such a configuration enables the user, who desires to raise the robot 100 into a robot having a character that the user prefers, to confirm the character of the robot 100 on the screen and set the character of the robot 100 to a character that the user prefers and cause the robot 100 to perform a movement that the user prefers. Further, when the pseudo growth of the robot 100 has already stopped and the character of the robot 100 has been fixed, it becomes possible to reset the growth value of the robot 100 and raise the robot 100 again.

An arbitrary method can be used as a method for providing such programs, and, for example, the programs may be stored in a non-transitory computer-readable recording medium (a flexible disk, a compact disc (CD)-ROM, a digital versatile disc (DVD)-ROM, a magneto-optical disc (MO), a memory card, a USB memory, or the like) and distributed or may be provided by storing the programs in a storage on a network, such as the Internet, and causing the programs to be downloaded.

In addition, when the above-described processing is to be executed through sharing of processing between an operating system (OS) and an application program or collaboration between the OS and the application program, only the application program may be stored in a non-transitory recording medium or a storage. It is also possible to superimpose a program on a carrier wave and distribute the program via a network. For example, the above-described program may be posted on a bulletin board system (BBS) on the network, and the program may be distributed via the network. The above-described processing may be configured to be able to be executed by starting up and executing the distributed program in a similar manner to other application programs under the control of the OS.

In addition, the controller 110 may be configured not only by an arbitrary processor, such as a single processor, multiple processors, and a multi-core processor, alone but also by combining such an arbitrary processor and a processing circuit, such as an application specific integrated circuit (ASIC) and a field-programmable gate array (FPGA).

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

**Claims**

1. A robot (100), comprising:

   an umbrella portion (2) capable of performing a rotational movement and an opening/closing movement of an umbrella;
   an emotion data acquirer to acquire emotion data (121) representing a pseudo emotion in accordance with an external stimulus; and
   a controller (110) to control, based on the emotion data (121), at least one of the rotational movement and the opening/closing movement of the umbrella of the umbrella portion (2).

2. The robot (100) according to claim 1, wherein the controller (110) controls the robot to express the emotion by controlling magnitude and speed of the rotational movement and the opening/closing movement of the umbrella of the umbrella portion (2).

3. The robot (100) according to claim 1 or 2, comprising:

   a light emitting portion (27); and
   a speaker (19), wherein
   the controller (110) controls the robot to express the emotion by controlling light emitted by the light emitting portion (27) and sound emitted by the speaker (19).

4. The robot (100) according to any one of claims 1 to 3, wherein the emotion data acquirer acquires the emotion data (121) based on a coordinate value on an emotion map (300) that represents a distribution of emotion.

5. The robot (100) according to any one of claims 1 to 4, wherein the emotion data acquirer acquires data forming the emotion data (121) from an external information communication terminal.

6. The robot (100) according to any one of claims 1 to 5, wherein, when the external stimulus is not applied, the controller (110) causes the robot (100) to perform a spontaneous movement by controlling the umbrella portion (2).

7. The robot (100) according to claim 3, wherein, when the external stimulus is not applied, the controller (110) causes the robot (100) to perform a spontaneous movement by controlling at least one of light emitted by the light emitting portion (27) and sound emitted by the speaker (19).

8. The robot (100) according to any one of claims 1 to 7, comprising:

a body portion (1), wherein
the umbrella portion (2) is arranged on top of the body portion (1).

## FIG.1A

## FIG.1B

## FIG.2A

## FIG.2B

## FIG.3A

## FIG.3B

## FIG.4A

## FIG.4B

## FIG.4C

## FIG.4D

*FIG.5*

100

ROBOT

110

CONTROLLER

120

STORAGE

EMOTION DATA ~121

EMOTION
CHANGE DATA ~122

GROWTH TABLE ~123

MOVEMENT
DETAIL TABLE ~124

GROWTH DAYS
DATA ~125

130

COMMUNICATOR

210

SENSOR GROUP

220

DRIVER

230

OUTPUTTER

240

OPERATION
ACCEPTOR

## FIG.6

# FIG.7

400

ACTIVE

10

412

5

413    410    411

SHY    HAPPY

10    5    0    5    10

5

414

10

WANTED

## FIG.8

```
        ┌─────────────────────────┐
        │   MOVEMENT CONTROL      │
        │      PROCESSING         │
        └────────────┬────────────┘
                     │          S101
        ┌────────────▼────────────┐
        │    INITIALIZATION       │
        │      PROCESSING         │
        └────────────┬────────────┘
                     │          S102
        ┌────────────▼────────────┐
        │   EXTERNAL STIMULUS     │
        │ ACQUISITION PROCESSING  │
        └────────────┬────────────┘
                     │          S103
              ╱──────▼──────╲
             ╱ EXTERNAL      ╲        YES          S104
            ╱  STIMULUS       ╲──────────┐  ┌──────────────────┐
            ╲  APPLIED?       ╱          │  │ ACQUIRE EMOTION  │
             ╲               ╱           │  │  CHANGE DATA     │
              ╲──────┬──────╱            │  └────────┬─────────┘
                  NO │                   │           │      S105
                     │                   │  ┌────────▼─────────┐
                     │                   │  │  SET EMOTION     │
                     │                   │  │     DATA         │
                     │                   │  └────────┬─────────┘
                     │                   │           │      S106
                     │                   │  ┌────────▼─────────┐
                     │         S107      │  │ PERFORM MOVEMENT │
              ╱──────▼──────╲            │  │ MATCHING EXTERNAL│
             ╱ SPONTANEOUS   ╲  YES      │  │    STIMULUS      │
             ╲ MOVEMENT?     ╱──┐ S108   │  └────────┬─────────┘
              ╲─────┬───────╱   │        │           │
                 NO │      ┌────▼─────┐  │           │
                    │      │ PERFORM  │  │           │
                    │      │SPONTANEOUS│ │           │
                    │      │ MOVEMENT │  │           │
                    │      └────┬─────┘  │           │
                    │           └────────┼───────────┘
                    │          S109      │
              ╱─────▼───────╲◄───────────┘
        ◄─────╲ DATE CHANGED?╱
         NO    ╲────┬───────╱
                YES │   S110
              ╱─────▼───────╲
        ◄─────╲ WITHIN FIRST ╱
         NO    ╲  PERIOD?    ╱
               ╲────┬───────╱
                YES │    S111
        ┌───────────▼─────────────┐
        │   TRAIN EMOTION         │
        │  CHANGE DATA AND        │
        │ EXPAND EMOTION MAP      │
        └───────────┬─────────────┘
                    │         S112
        ┌───────────▼─────────────┐
        │ ADD 1 TO GROWTH DAYS    │
        │ DATA AND INITIALIZE     │
        │   EMOTION DATA          │
        └─────────────────────────┘
```

## FIG.9A

300

| | | |
|---|---|---|
| IRRITATION | EXCITEMENT | PLEASURE |
| ANXIETY | NORMAL | SECURITY |
| SADNESS | APATHY | CALMNESS |

RAPID MOVEMENT   LARGE MOVEMENT

SLOW MOVEMENT   SMALL MOVEMENT

LATERAL ROTATIONAL MOVEMENT

OPENING/ CLOSING MOVEMENT

## FIG.9B

300

REDDISH PURPLE   RED   ORANGE

| | | |
|---|---|---|
| IRRITATION | EXCITEMENT | PLEASURE |
| ANXIETY | NORMAL | SECURITY |
| SADNESS | APATHY | CALMNESS |

PURPLE   YELLOW

BLUISH PURPLE   BLUE   GREEN

FIG.10B

FIG.10A

FIG.10D

FIG.10C

FIG.10E

FIG.10F

Europäisches Patentamt

European Patent Office

Office européen des brevets

## EUROPEAN SEARCH REPORT

Application Number

EP 22 21 1360

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/132685 A1 (ATSUMI HIROKI [JP]) 6 May 2021 (2021-05-06) * the whole document * | 1-8 | INV. B25J11/00 B25J13/08 B25J19/02 G06N3/008 |
| A | US 2019/308327 A1 (WOLFORD JASON [US] ET AL) 10 October 2019 (2019-10-10) * the whole document * | 1-8 | |
| A | WO 2020/158642 A1 (SONY CORP [JP]) 6 August 2020 (2020-08-06) * the whole document * | 1-8 | |
| A | CN 112 873 224 A (SHANGHAI DG INTELLIGENCE TECH CO LTD) 1 June 2021 (2021-06-01) * the whole document * | 1-8 | |
| A | CN 204 686 881 U (CIXI GUANGMING LIGHTING CO LTD) 7 October 2015 (2015-10-07) * the whole document * | 1-8 | |
| A | EP 3 400 081 B1 (EVOLLVE INC [US]) 18 December 2019 (2019-12-18) | 1-8 | TECHNICAL FIELDS SEARCHED (IPC) B25J G06N |
| A | HAODAN TAN ET AL: "Happy Moves, Sad Grooves", DESIGNING INTERACTIVE SYSTEMS, ACM, 2 PENN PLAZA, SUITE 701 NEW YORK NY 10121-0701 USA, 4 June 2016 (2016-06-04), pages 1282-1293, XP058259348, DOI: 10.1145/2901790.2901845 ISBN: 978-1-4503-4031-1 * the whole document * | 1-8 | |

The present search report has been drawn up for all claims

| Place of search | Date of completion of the search | Examiner |
|---|---|---|
| Munich | 12 May 2023 | Vázquez Cabello, R |

## EP 4 201 609 A1

### ANNEX TO THE EUROPEAN SEARCH REPORT
### ON EUROPEAN PATENT APPLICATION NO.

EP 22 21 1360

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2023

| Patent document cited in search report | | Publication date | Patent family member(s) | | Publication date |
|---|---|---|---|---|---|
| US 2021132685 | A1 | 06-05-2021 | JP | 7070529 B2 | 18-05-2022 |
| | | | JP | 2021069767 A | 06-05-2021 |
| | | | US | 2021132685 A1 | 06-05-2021 |
| | | | US | 2022107683 A1 | 07-04-2022 |
| US 2019308327 | A1 | 10-10-2019 | EP | 3758899 A1 | 06-01-2021 |
| | | | US | 2019308327 A1 | 10-10-2019 |
| | | | WO | 2019195779 A1 | 10-10-2019 |
| WO 2020158642 | A1 | 06-08-2020 | JP | WO2020158642 A1 | 02-12-2021 |
| | | | US | 2022097230 A1 | 31-03-2022 |
| | | | WO | 2020158642 A1 | 06-08-2020 |
| CN 112873224 | A | 01-06-2021 | NONE | | |
| CN 204686881 | U | 07-10-2015 | NONE | | |
| EP 3400081 | B1 | 18-12-2019 | CN | 108697938 A | 23-10-2018 |
| | | | CN | 111991817 A | 27-11-2020 |
| | | | EP | 3400081 A1 | 14-11-2018 |
| | | | JP | 7156944 B2 | 19-10-2022 |
| | | | JP | 2019510524 A | 18-04-2019 |
| | | | KR | 20180104645 A | 21-09-2018 |
| | | | US | 2019009181 A1 | 10-01-2019 |
| | | | US | 2020129875 A1 | 30-04-2020 |
| | | | WO | 2017120180 A1 | 13-07-2017 |

**EP 4 201 609 A1**

**Patent documents cited in the description**

- JP 2002307354 A

- JP 2020137687 A